# EUROPÄISCHE PATENTSCHRIFT

(11) **EP 3 730 335 B1**
(45) Veröffentlichungstag und Bekanntmachung des Hinweises auf die Patenterteilung: **12.10.2022**
(21) Anmeldenummer: 20167685.5
(22) Anmeldetag: 02.04.2020
(51) Int. Cl.: B60K 37/06, G06F 3/0488, G06F 3/01, G06F 3/0484

(54) **VERFAHREN ZUR INSZENIERUNG EINES BEDIENMODALITÄTENWECHSELS EINES FAHRZEUGS, SYSTEM ZUR INSZENIERUNG EINES BEDIENMODALITÄTENWECHSELS EINES FAHRZEUGS**
METHOD FOR THE STAGING OF AN OPERATING MODE CHANGE OF A VEHICLE, SYSTEM FOR THE STAGING OF AN OPERATING MODE CHANGE OF A VEHICLE
PROCÉDÉ DE MISE EN OEUVRE D'UN CHANGEMENT DE MODALITÉ DE FONCTIONNEMENT D'UN VÉHICULE, SYSTÈME DE MISE EN OEUVRE DU CHANGEMENT DU FONCTIONNEMENT D'UN VÉHICULE

(30) Priorität: 09.04.2019 DE 102019205097
(43) Veröffentlichungstag der Anmeldung: 28.10.2020
(73) Patentinhaber: VOLKSWAGEN AG, 38440 Wolfsburg (DE)
(72) Erfinder: Kassner, Astrid, 10117 Berlin (DE)

(56) Entgegenhaltungen:
- DE-A1-102011 121 746
- DE-A1-102013 022 035
- DE-A1-102016 001 998
- DE-A1-102017 113 781
- US-A1- 2018 222 490

## Beschreibung

Die Erfindung betrifft ein Verfahren zur Inszenierung eines Bedienmodalitätenwechsels eines Fahrzeugs sowie ein System zur Inszenierung eines Bedienmodalitätenwechsels eines Fahrzeugs.

Fahrzeuge, insbesondere Kraftfahrzeuge, weisen im Innenraum zahlreiche Bedienelemente für den Nutzer auf. Diese Bedienelemente sind dabei vorrangig für den Fahrer des Fahrzeugs vorgesehen und werden zunehmend auch in Form von bedienbaren Anzeigenvorrichtungen vorgehalten. In diesem Zusammenhang sind bereits beispielsweise Anwendungen im Sinne einer Touchbedienung aus dem Stand der Technik bekannt. Beim heutigen manuellen Fahren hat der Fahrer eine Sitzposition, welche ihm das Erreichen beispielsweise eines Mittendisplays beziehungsweise eines entsprechenden Bildschirms einer Anzeigenvorrichtung und damit eine Touchbedienung ermöglicht. Künftige Fahrmodi, etwa im automatischen Fahrmodus (Level 4 und 5), ermöglichen das Zurückstellen des Fahrsitzes, um einem Nutzer eine höhere Bequemlichkeit zu ermöglichen. Eine Touchbedienung des Mittendisplays ist dann nicht mehr möglich. Für viele Bedienhandlungen ist in dieser displayfernen Sitzposition eine andere Art der Bedienung, beispielsweise mittels von Gesten des Nutzers, sinnvoll. Voraussetzung für eine erfolgreiche Bedienung des Mittendisplays durch den Fahrer in den verschiedenen Fahrmodi ist es, dass ihm verdeutlicht wird, wie er aktuell das Mittendisplay bedienen kann und welche Inhalte dabei vorhanden sind. Aus dem Stand der Technik werden Lösungsansätze zu ähnlichen Anwendungsfällen oder in einem erweiterten oder anderem Kontext offenbart, wobei die vorgestellte Problematik lediglich partiell und nicht unmittelbar in dem vorgestellten Kontext behandelt wird.

So ist aus der Druckschrift EP 3 095 635 A2 eine Fahrzeuganzeigevorrichtung und ein Verfahren zum Steuern derselben als bekannt zu entnehmen. Die Anzeigevorrichtung umfasst dabei eine Anzeige und eine Steuerung, welche konfiguriert ist, um eine Manipulationsvariable einer an einem Fahrzeug vorgesehenen Fahrmanipulationsvorrichtung zu überwachen, um einen beliebigen Fahrmodus auszuwählen, welcher der Manipulationsgröße der Fahrmanipulation der Vorrichtung aus einer Vielzahl von vorbestimmten Fahrmodi entspricht und um die Anzeige zu steuern, um unterschiedliche Informationen gemäß der Vielzahl von Fahrmodi anzuzeigen. Wenn ein entsprechender Fahrmodus ausgewählt wird, verringert die Steuerung die auf der Anzeige angezeigten Fahrinformationen und erhöht die auf der Anzeige angezeigten Komfortinformationen.

Aus der Druckschrift US 2011/0154268 A1 ist zudem ein Verfahren und Vorrichtungen zum Implementieren von einer Gestenbefehlserkennungsfunktionalität als bekannt zu entnehmen. Dabei können die Vorrichtungen in einem Zeigemodus arbeiten und in einem verbesserten Gestenmodus arbeiten. Im erweiterten Gestenmodus können die Geräte in Reaktion auf das Erkennen gleitender Eingaben als Gestenbefehle zugehörige Aktionen auslösen. Die Gestenbefehle können selektiv Aktionen basierend auf Orten zugeordnet werden. Die Vorrichtungen können Überlagerungen mit Informationsinhalt unabhängig von der Gestenbefehlserkennung bieten. Die Vorrichtungen können das Erscheinungsbild visueller Darstellungen von gleitenden Eingaben als Reaktion auf das Erkennen der gleitenden Eingaben als Gestenbefehle ändern.

Aus der Druckschrift WO 2018/057663 A1 ist zudem eine gestenbasierende Kontrolle von autonomen Fahrzeugen als bekannt zu entnehmen. In diesem Zusammenhang wird eine Auslösebedingung zum Einleiten einer gestenbasierten Interaktionssitzung mit einem Insassen eines Fahrzeugs erfasst. Eine Anzeige wird mit Darstellungen einer oder mehrerer Optionen für mit dem Fahrzeug verbundene Vorgänge bestückt. Basierend zumindest teilweise auf einer Analyse eines oder mehrerer Signale, wie zum Beispiel Gesten, die vom Insassen generiert werden, wird eine bestimmte Option zur Implementierung ausgewählt. Es wird ein Hinweis darauf gegeben, dass die bestimmte Option ausgewählt wurde, und eine Operation, die der bestimmten Option entspricht, wird eingeleitet.

Aus der US 2017/0277271 A1 sind zudem eine Bedienvorrichtung und ein Verfahren zum Bedienen von Funktionen eines Fahrzeugs, insbesondere eines Kraftfahrzeugs als bekannt zu entnehmen. Diese umfassen eine Gestenerfassungsvorrichtung, welche die Erfassung von Gesten ermöglicht, die von einer Person in einem Innenraum des Fahrzeugs zum Bedienen der Funktionen ausgeführt werden. Die Gestenerfassungsvorrichtung weist eine Vielzahl von Operationszonen im Inneren auf, wobei jede Zone einer der Funktionen zugeordnet ist und zum Bedienen der jeweiligen Funktion durch eine der jeweiligen Operationszone zugeordnete Geste auswählbar ist.

Aus der Druckschrift US 2017/0083197 A1 ist zudem eine Vorrichtung und ein Verfahren zum Bereitstellen einer Benutzerschnittstelle als bekannt zu entnehmen. Die Vorrichtung zum Bereitstellen einer Benutzerschnittstelle stellt einen ersten Benutzerschnittstellenmodus bereit und kann zu einem zweiten Benutzerschnittstellenmodus wechseln, wenn sie einen Benutzerbefehl erhält, der sie anweist, ihren Modus in den zweiten Benutzerschnittstellenmodus zu wechseln, der ein anderes Benutzerbefehlseingabeverfahren aufweist als der erste Benutzeroberflächenmodus. In dem Umschaltprozess kann die Vorrichtung zum Bereitstellen einer Benutzerschnittstelle ein Erkennungsmuster zurücksetzen, um weniger Benutzereingabetypen zu klassifizieren, als in dem ersten Benutzerschnittstellenmodus klassifiziert sind.

DE 10 2016 001 998 A1 offenbart ein Verfahren zum Betreiben einer Bedienvorrichtung, um eine Wechselwirkung zwischen grafischen Objekten und einer Hand eines Benutzers zu bewirken. Durch Erfassen einer Bediengeste einer Hand eines Benutzers wird ausgehend von einem Normalbetriebsmodus bei erkannter Handgeste ein Auswahlmodus in der virtuellen Darstellungsebene aktiviert.

DE 10 2017 113 781 A1 offenbart ein Verfahren zum Betreiben einer Anzeigevorrichtung für einen Kraftwagen. Eine Anzeigevorrichtung umfasst eine Mehrzahl von Anzeigeflächen. Auf Grundlage einer von einem Fahrer des Kraftwagens einstellbaren Konfiguration des Kraftwagens wird eine dieser Anzeigeflächen zur Anzeige ausgewählt.

DE 10 2013 022 035 B4 offenbart eine Kraftfahrzeug-Bedienvorrichtung mit grafischer Benutzerschnittstelle, bei dem ein Wechsel von Bedienmodi auf eine Anzeigevorrichtung des Fahrzeuges stattfinden kann. Ausgelöst wird der Wechsel der Bedienmodi durch ein vom Fahrzeug bereitgestelltes Auslösesignal, das abhängig von einer Blickrichtung eines Benutzers bereitgestellt wird.

DE 10 2011 121 746 A1 offenbart ein Fahrzeugbetriebs- und Fahrzeugsteuerungssystem für autonome Fahrzeuge auf einer Vollwindschutzscheibenanzeige. Hierbei wird eine Navigationszustandsgrafik dargestellt, wobei ein Nutzer des Fahrzeuges eine Benutzereingabe mittels einer Gestensteuerung durchführen kann.

Die zuvor angesprochene Problematik wird in den vorgestellten Lösungsansätzen nicht unmittelbar und in vollem Umfang behandelt. Es fehlt eine direkte Unterstützung eines Nutzers, insbesondere während eines Übergangmodus bei verschiedenen Anwendungsszenarien.

Der Erfindung liegt nun die Aufgabe zugrunde, ein Verfahren und ein System bereitzustellen, welche es einem Nutzer ermöglichen, jeweilige Bedienmöglichkeiten des Fahrzeugs bei verschiedenen Anwendungsfällen während der Anwendung automatisch anzuzeigen.

Es wird ein Verfahren zur Inszenierung eines Bedienmodalitätenwechsels eines Fahrzeugs bereitgestellt. Solch ein Verfahren umfasst dabei die folgenden Schritte: Betreiben zumindest einer Anzeigenvorrichtung in dem Fahrzeug, welche zumindest teilweise einen Bildschirm umfasst, wobei die zumindest eine Anzeigenvorrichtung zumindest zwei Bedienungsmodi für die Bedienung durch einen Nutzer umfasst, automatisches Bereitstellen eines Auslösesignals an die zumindest eine Anzeigevorrichtung, wobei das Auslösesignal von mindestens einem Auslöseereignis ausgelöst wird, wobei das Auslöseereignis direkt oder indirekt vom Fahrzeug bereitgestellt wird und das Auslösesignal einen Wechsel von einem ersten Bedienmodus zu einem zweiten Bedienmodus auslöst, wobei dem Nutzer dieser Wechsel durch zumindest ein Bedienhinweissignal zumindest teilweise angezeigt wird. Auf diese Weise ist es möglich, den Nutzer, beispielsweise einen Fahrer des Fahrzeugs, während der jeweiligen Bedienmöglichkeiten des Fahrzeugs im Sinne zumindest einer Funktion des Fahrzeugs bei verschiedenen Anwendungsfällen automatisch während der Anwendung zu unterstützen. Das Auslöseereignis wird direkt oder indirekt vom Fahrzeug bereitgestellt, wobei beispielsweise eine automatisierte Veränderung im Fahrzeug dieses Ereignis direkt bedingt, ohne dass ein Nutzer beziehungsweis Fahrer tätig wird. In diesem Zusammenhang wird ein Ereignis dann indirekt vom Fahrzeug bereitgestellt, wenn ein Nutzer zuvor zumindest ein Objekt oder einen Zustand von dem Fahrzeug aktiv ändert und somit automatisch parallel dazu ein Auslöseereignis auslöst, sodass ein Wechsel im Sinne des vorgestellten Verfahrens herbeigeführt wird. Insbesondere wird dem Nutzer mittels dem vorgestellten Verfahren benutzerfreundlich und unmittelbar ein Bedienmodalitätenwechsel angezeigt, sodass dem Nutzer in jeder Situation klar ist, inwiefern eine Bedienung erreicht werden kann. Es wird beispielsweise dem Fahrer verdeutlicht, dass ein Wechsel des Bedienmodus stattfindet, sodass anschließend oder sogar während dieses Vorgangs eine intuitive und einfache Bedienung im Sinne des jeweiligen Modi angezeigt und somit anwendbar ist. Mit anderen Worten wird es einem Nutzer mittels dem vorgestellten Verfahren verdeutlicht, inwiefern während eines Wechsels eines Bedienungsmodus nunmehr eine entsprechende Anzeigenvorrichtung zu bedienen ist, wobei mittels des Bedienhinweissignals der Nutzer automatisch darauf hingewiesen wird. Dies hat den Vorteil, dass eine jeweilige Bedienmöglichkeit des Fahrzeugs bei verschiedenen Anwendungsfällen während der Anwendung nicht nur automatisch angezeigt wird, sondern der Nutzer in jeglicher Situation weiß, welche Art des Bedienmodus nunmehr anzuwenden ist. Eine zuverlässige und stetige Bedienung des Fahrzeugs beziehungsweise zumindest einer Funktion des Fahrzeugs wird somit auf einfache Weise zur Verfügung gestellt, wobei dies dynamisch und in Abhängigkeit eines Auslöseereignisses vollzogen wird. Das Auslöseereignis kann beispielsweise im Zusammenhang mit einem jeweiligen Fahrmodus oder einer Veränderung eines Gegenstandes im Innenraum oder Außenraum des Fahrzeugs stehen. Es ist zudem vorstellbar, dass über die erwähnten Bedienmodi hinausgehend zusätzlich noch andere Bedienmodi vorgesehen sind, beispielsweise standardmäßige haptische Bedieneinrichtungen wie beispielsweise Knäufe, Knöpfe oder dergleichen, welche im Falle auftretender Schwierigkeiten mit den erwähnten Bedienmodi eine stete Bedienung sicherstellen.

Zudem ist in einer weiteren bevorzugten Ausgestaltung der Erfindung vorgesehen, dass das zumindest eine Bedienhinweissignal synchron zu dem zumindest einem Auslöseereignis bereitgestellt wird. Die zuvor genannten Vorteile lassen sich somit noch besser erreichen. Insbesondere wird somit vermieden, dass ein Nutzer überfordert wird, da die sich verändernden Eigenschaften im Wesentlichen parallel und gleichmäßig vollzogen werden. Dies wird von einem Nutzer als harmonisch und deswegen angenehm empfunden, sodass diese Information auch während einer parallelen Handlungsweise sehr gut aufgenommen werden kann.

Erfindungsgemäß ist vorgesehen, dass das Auslöseereignis im direkten und/oder indirekten Zusammenhang mit einem Wechsel eines Fahrmodus des Fahrzeugs steht. Je nach Fahrmodus kann somit ein jeweiliger Bedienmodus favorisiert beziehungsweise sogar nötig sein. Auch kann ein jeweiliger Fahrmodus darauf hindeuten, dass ein entsprechender Bedienmodus nunmehr einzustellen ist, da dieser Wechsel einem Nutzer mehr Komfort oder eine sichere Bedienweise ermöglicht. Dabei sind zum Beispiel auch Fahrmodi in Abhängigkeit einer jeweiligen Fahrzeuggeschwindigkeit bezogen auf eine Umgebung oder bezogen auf unmittelbar umgebende Fahrzeuge oder Verkehrsteilnehmer gemeint. Beispielsweise kann es in einem bestimmten Fahrmodus vorteilhaft sein, einen Wechsel auf eine Gestenbedienweise inklusive von Kopfbewegungen oder Augenbewegungen einzuleiten, da der Fahrmodus bedingt, dass die Hände nur bedingt für eine Eingabe beziehungsweise allgemein einer Bedienung der Anzeigenvorrichtung zur Verfügung stehen.

In weiterer bevorzugter Ausgestaltung der Erfindung ist vorgesehen, dass ein System zur Inszenierung eines Bedienmodalitätenwechsels eines Fahrzeugs bereitgestellt wird. Solch ein System umfasst dabei zumindest eine Anzeigenvorrichtung, welche zumindest teilweise einen Bildschirm umfasst, wobei die zumindest eine Anzeigenvorrichtung in zumindest zwei Bedienungsmodi betreibbar ist, wobei ein erster Bedienmodus zumindest teilweise eine Touchbedienfunktion umfasst und ein zweiter Bedienmodus zumindest teilweise eine Gestenbedienfunktion, steuerbar mittels einer Gestenbedienungsvorrichtung, umfasst, wobei die Anzeigenvorrichtung ausgelegt ist, ein Auslösesignal von mindestens einem Auslöseereignis entgegenzunehmen. Dabei ist das Auslöseereignis direkt oder indirekt vom Fahrzeug bereitstellbar. Mittels dem Auslösesignal ist ein Wechsel von dem ersten Bedienmodus zu dem zweiten Bedienmodus in der zumindest einen Anzeigenvorrichtung auslösbar, wobei dem Nutzer dieser Wechsel durch zumindest ein Bedienhinweissignal zumindest teilweise anzeigbar ist. Die zuvor genannten Vorteile gelten soweit übertragbar auch für das vorgestellte System.

Weitere bevorzugte Ausgestaltungen der Erfindung ergeben sich aus den übrigen, in den Unteransprüchen genannten Merkmalen.

So ist in einer weiteren bevorzugten Ausgestaltung der Erfindung vorgesehen, dass die Anzeigenvorrichtung in den zumindest zwei Bedienungsmodi mindestens einen gleichen Informationsinhalt für den Nutzer bereitstellt. Somit kann sichergestellt werden, dass, unabhängig von einem jeweiligen Bedienungsmodi, ein Nutzer auch während eines Wechsels stets Zugriff auf einen jeweiligen momentan angezeigten Inhalt hat. Beispielsweise kann solch ein Informationsinhalt im Zusammenhang mit einer Navigationsfunktion des Fahrzeugs stehen. Ein Nutzer möchte beispielsweise in jeglichem Bedienungsmodi einen Zugriff, sei es lediglich visuell oder auch funktionell, auf diese Inhalte beibehalten. Auch ist es dabei wichtig, dass dem Nutzer in jeglicher Situation klar ist, inwiefern eine Bedienweise dieses Inhaltes möglich ist. Mit anderen Worten ist es gewollt, dass mittels dem vorgestellten Verfahren der Nutzer auch während und nach einem Wechsel eines Bedienmodus stets darüber informiert ist, inwiefern ein angezeigter Inhalt von der Anzeigenvorrichtung zu bedienen ist und welche Bedienweise dabei möglich ist, beziehungsweise welche Bedienweise nunmehr aktiviert ist.

Auch ist in einer weiteren bevorzugten Ausgestaltung der Erfindung vorgesehen, dass die Anzeigenvorrichtung in dem zweiten Bedienmodus mindestens eine weitere Information und/oder mindestens eine verschiedene Information verglichen mit dem Informationsinhalt in dem ersten Bedienmodus für den Nutzer bereitstellt. Auf diese Weise kann bei einem angezeigten Wechsel beispielsweise das Bedienhinweissignal zumindest teilweise auch in Form von einem zusätzlichen Inhalt auf dem Bildschirm der Anzeigenvorrichtung einem Nutzer verdeutlicht werden. Auch ist vorstellbar, dass sowohl ein unabhängiges Bedienhinweissignal als auch ein zusätzlicher Inhalt, beispielsweise im Sinne eines zusätzlichen Medienangebots für Insassen im Fahrzeug oder einer zusätzlichen Funktion, während und nach dem Wechsel angezeigt beziehungsweise bereitgestellt werden. Es ist also vorstellbar, dass beispielsweise nach dem Wechsel etwa Filmangebote oder Einkaufsfunktionen angezeigt werden, welche nunmehr aktiviert und abrufbar sind.

Zudem ist in einer weiteren bevorzugten Ausgestaltung der Erfindung vorgesehen, dass der erste Bedienmodus zumindest teilweise eine Touchbedienfunktion umfasst und der zweite Bedienmodus zumindest teilweise eine Gestenbedienfunktion, steuerbar mittels einer Gestenbedienungsvorrichtung, umfasst. Die zuvor genannten Vorteile sind somit noch besser erreichbar. Beispielsweise werden heutige Inhalte in Form von Kacheln auf dem Bildschirm der Anzeigenvorrichtung dargestellt. Diese Inhalte können beispielsweise mittels einem Infotainmentsystem auf einem Homescreen für einen Nutzer, beziehungsweise für mehrere Nutzer oder Insassen des Fahrzeugs bereitgestellt werden. Diese Inhalte sind dabei optimiert für eine Touchbedienung, wobei insbesondere eine bildschirmnahe Sitzposition für eine bequeme und intuitive Bedienweise für diese Art der Bedienung vorteilhaft ist. Mit anderen Worten ist eine Touchbedienung insbesondere für einen Nahmodus, in welchem ein Nutzer in zugriffsnähe positioniert ist, von Vorteil. Befindet sich jedoch der Nutzer während der Anwendung nicht in diesem Nahmodus, sondern in einer bildschirmfernen Position, ist es wichtig, dass dennoch dem Nutzer verdeutlicht wird, dass die angezeigten Inhalte beziehungsweise Funktionen, welche auf dem Bildschirm der Anzeigenvorrichtung dargeboten werden, immer noch zur Verfügung stehen, aber nunmehr auf eine andere Art und Weise bedienbar sind. Mittels dem vorgestellten Verfahren kann dem Nutzer, beispielsweise dem Fahrer, im Falle eines Wechsels angezeigt werden, dass nunmehr eine Gestenbedienweise möglich oder sogar ausschließlich möglich ist. Insofern wird mittels dem vorgestellten Verfahren eine Lösung der vorgestellten Aufgabe bereitgestellt, welche dem Fahrer beziehungsweise allgemein einem Nutzer verdeutlicht, inwiefern sich ein Bedienmodus ändert, sodass in jeglicher Situation eine schnelle und unmittelbare Bedienung gewährleistet wird.

Ferner ist in einer weiteren bevorzugten Ausgestaltung der Erfindung vorgesehen, dass zumindest ein Ausprägungsmerkmal des mindestens einen Auslöseereignisses zumindest ein Ausprägemerkmal des zumindest einen Bedienhinweissignales bedingt. Je nach Verknüpfung dieser Ausprägungsmerkmale kann somit einem Nutzer besonders gut angezeigt werden, inwiefern sich ein wechselnder Bedienmodus vollzieht und entsprechend eine jeweilige Bedienvorgehensweise nunmehr aktiviert und gültig ist.

Auch ist in einer weiteren bevorzugten Ausgestaltung der Erfindung vorgesehen, dass das zumindest eine Ausprägungsmerkmal des mindestens einen Auslöseereignisses ausgewählt ist aus: Dauer des Auslöseereignisses, Geschwindigkeitsverlauf des Auslöseereignisses, und das zumindest eine Ausprägemerkmal des zumindest einen Bedienhinweissignales ausgewählt ist aus: Dauer des Bedienhinweissignales, Geschwindigkeitsverlauf des Bedienhinweissignales.

Diese speziellen Verknüpfungsweisen der Ausprägungsmerkmale ermöglichen eine besonders gut wahrnehmbare Art des Hinweises für einen Nutzer, sodass dieser zuverlässig und in jeglicher Situation mit den nötigen Informationen versorgt wird, um eine intuitive und sichere Bedienung umzusetzen.

Auch ist in einer weiteren bevorzugten Ausgestaltung der Erfindung vorgesehen, dass der Wechsel des Fahrmodus des Fahrzeugs ein Wechsel von einem manuellen Fahrmodus zu einem teil- oder vollautomatischen Fahrmodus ist. Das vorgestellte Verfahren kann die zuvor genannten Vorteile insbesondere bei diesem Anwendungsszenario besonders gut bereitstellen. Während eines vollautomatischen Fahrmodus kann beispielsweise der Fahrer seine Position im Innenraum verändern beziehungsweise es wird dem Fahrer die Möglichkeit geboten, sich frei im Innenraum zu bewegen. Dies kann bedingen, dass eine bildschirmferne Position des Nutzers resultiert, sodass nunmehr eine Touchbedienung gar nicht oder nur erschwert möglich ist. Diese neue Positionierung kann mittels verschiedener Techniken, beispielsweise mittels von Sensoren oder dergleichen, registriert werden und es kann entsprechend diesem Auslöseereignis ein Auslösesignal bereitgestellt und folglich ein Bedienmodalitätswechsel eingeläutet werden. Insofern kann das vorgestellte Verfahren auch als ein Verfahren zur Inszenierung eines Bedienmodalitätenwechsels bei einem Wechsel eines Fahrmodus vom manuellen Fahren zum automatischen Fahren angesehen beziehungsweise bezeichnet werden.

Zudem ist in einer weiteren bevorzugten Ausgestaltung der Erfindung vorgesehen, dass das Auslöseereignis eine Verstellung einer Sitzvorrichtung des Nutzers und/oder eine Verstellung zumindest einer Sitzvorrichtung des Fahrzeugs umfasst. Beispielsweise kann ein Wechsel vom manuellen zum automatischen Fahren mit der Verstellung des Sitzes beziehungsweise allgemein einer Sitzvorrichtung von einer bildschirmnahen in eine bildschirmferne Sitzposition einhergehen. Es kann vorgesehen sein, dass diese Veränderung bereits das Auslöseereignis darstellt und entsprechend ein Auslöseereignis ausgelöst wird. In diesem Sinne wird also dann ein Bedienmodalitätswechsel eingeleitet, wobei ein Nutzer entsprechend hierüber informiert wird, sodass klar ist, inwiefern nunmehr eine Bedienweise möglich ist beziehungsweise bereitgestellt wird. Dabei ist es ein Ziel von dem vorgestellten Verfahren, dass der Fahrer beziehungsweise der Nutzer nicht selbst den Modus wechseln muss und den Wechsel der Bedienmodi aufgrund der Sitzverstellung leichter nachvollziehen kann. Mit anderen Worten ermöglicht beispielsweise eine Sitzverstellung einen automatischen Wechsel von einem Bedienmodus zu einem anderen Bedienmodus. Eine Veränderung der Sitzposition beziehungsweise eine Verstellung der Sitzvorrichtung kann dabei in jeglicher Richtung vorgesehen sein, sodass entsprechend eine neue Position, beispielsweise eine bildschirmferne Position, resultiert. Beispielsweise kann eine Verdrehung der Sitzvorrichtung um eine im Wesentlichen mittig vorgesehene Rotationsachse ebenso zu einer bildschirmfernen Position führen. Auch lediglich die Verstellung eines Teils beziehungsweise einer Komponente der Sitzvorrichtung kann als eine Verstellung der Sitzvorrichtung aufgefasst werden. So eine Komponente kann beispielsweise eine Sitzeinheit oder ein Rückenlehnelement von so einer Sitzvorrichtung sein.

Des Weiteren ist in einer weiteren bevorzugten Ausgestaltung der Erfindung vorgesehen, dass die Verstellung entlang einer horizontalen Ebene in Fahrzeuglängsachse von einer bildschirmnahen zu einer bildschirmfernen Position vollzogen wird. Die zuvor genannten Vorteile lassen sich somit noch besser erreichen.

Ferner ist in einer weiteren bevorzugten Ausgestaltung der Erfindung vorgesehen, dass das Bedienhinweissignal optisch und/oder akustisch ist. Auf diese Weise kann es sehr gut ermöglicht werden, jeweilige Bedienmöglichkeiten des Fahrzeugs bei verschiedenen Anwendungsfällen während der Anwendung automatisch einem Nutzer anzuzeigen. Optische und akustische Signale können dabei insbesondere gut von einem Nutzer verarbeitet und somit folgerichtig registriert werden, sodass ein Wechsel zuverlässig wahrgenommen wird und eine entsprechende Bedienweise jederzeit sinngemäß ausführbar angewendet werden kann.

Zudem ist in einer weiteren bevorzugten Ausgestaltung der Erfindung vorgesehen, dass das Bedienhinweissignal optisch in Form zumindest eines halbtransparenten Symbols auf dem Bildschirm von der Anzeigenvorrichtung und/oder in Form einer zumindest teilweisen Veränderung eines Darstellungsmodus der Bildschirminhalte auf dem Bildschirm der Anzeigenvorrichtung angezeigt wird. Insbesondere während eines Wechsels des Bedienmodus und während ein Nutzer Blickkontakt zu dem Bildschirm hat, kann somit ein zuverlässiges Bedienhinweissignal automatisch vermittelt werden. Darüber hinaus weist das Bedienhinweissignal somit noch eine zusätzliche Funktion auf, wobei diese Funktion direkt in Form des halbtransparenten Symbols oder durch die Veränderung und/oder Animation dieses Symbols und somit einer entsprechenden Interpretation des Nutzers wahrgenommen werden kann.

Schlussendlich ist in einer weiteren bevorzugten Ausgestaltung der Erfindung vorgesehen, dass das Auslösesignal zumindest zeitweise eine Veränderung des Anzeigenmodus in dem zumindest einen Bildschirm auslöst. Dies kann beispielsweise eine leuchtende Umrandung von einzelnen auf dem Bildschirm gezeigten Elementen beziehungsweise Inhalten sein.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Ausschnitt von einem Bildschirm einer Anzeigenvorrichtung in einem ersten Bedienmodus;
- Figur 2: einen Ausschnitt von einem Bildschirm einer Anzeigenvorrichtung während eines ersten Zustands eines Wechsels von einem ersten Bedienmodus zu einem zweiten Bedienmodus;
- Figur 3: einen Ausschnitt von einem Bildschirm einer Anzeigenvorrichtung während eines zweiten Zustands eines Wechsels von einem ersten Bedienmodus zu einem zweiten Bedienmodus;
- Figur 4: einen Ausschnitt von einem Bildschirm einer Anzeigenvorrichtung während eines dritten Zustands eines Wechsels von einem ersten Bedienmodus zu einem zweiten Bedienmodus;
- Figur 5: einen Ausschnitt von einem Bildschirm einer Anzeigenvorrichtung während eines vierten Zustands eines Wechsels von einem ersten Bedienmodus zu einem zweiten Bedienmodus;
- Figur 6: einen Ausschnitt von einem Bildschirm einer Anzeigenvorrichtung während eines fünften Zustands eines Wechsels von einem ersten Bedienmodus zu einem zweiten Bedienmodus;
- Figur 7: einen Ausschnitt von einem Bildschirm einer Anzeigenvorrichtung in einem zweiten Bedienmodus mit einem Bedienhinweissignal;
- Figur 8a: einen weiteren Ausschnitt von einem Bildschirm einer Anzeigenvorrichtung in einem zweiten Bedienmodus mit einem Bedienhinweissignal;
- Figur 8b: einen weiteren Ausschnitt von einem Bildschirm einer Anzeigenvorrichtung in einem zweiten Bedienmodus mit einem Bedienhinweissignal;
- Figur 9a: einen weiteren Ausschnitt von einem Bildschirm einer Anzeigenvorrichtung in einem zweiten Bedienmodus mit einem Bedienhinweissignal;
- Figur 9b: einen weiteren Ausschnitt von einem Bildschirm einer Anzeigenvorrichtung in einem zweiten Bedienmodus mit einem Bedienhinweissignal;
- Figur 10: ein Flussdiagramm von einem Verfahren zur Inszenierung eines Bedienmodalitätenwechsels eines Fahrzeugs; und
- Figur 11: eine Schnittansicht von einem Fahrzeug mit einem System zur Inszenierung eines Bedienmodalitätenwechsels eines Fahrzeugs.

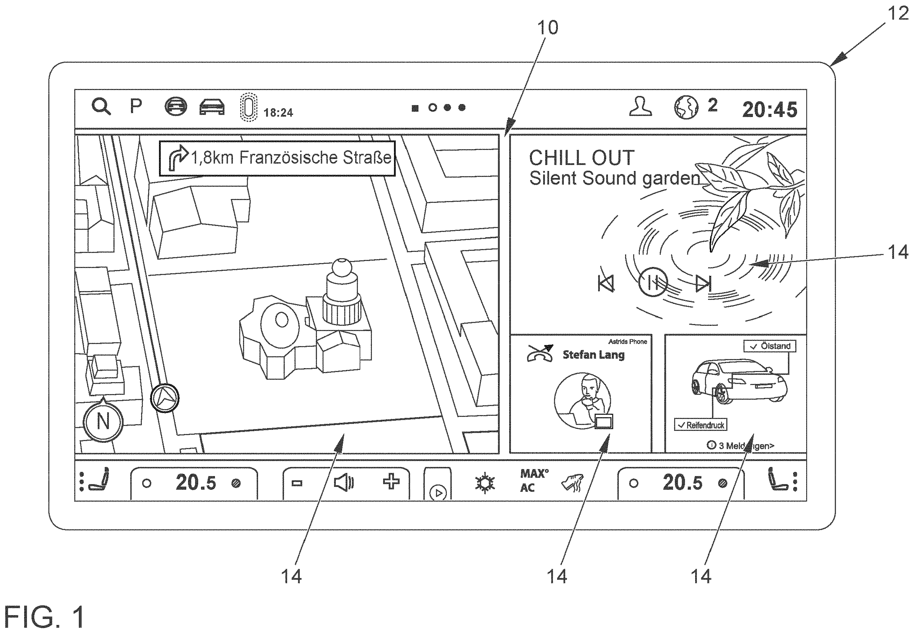

Figur 1 zeigt einen Ausschnitt von einem Bildschirm 10 einer Anzeigenvorrichtung 12 in einem ersten Bedienmodus. Dieser erste Bedienmodus kann beispielsweise eine Touchbedienung für einen Nutzer ermöglichen. Die auf dem Bildschirm 10 dargestellten Inhalte, welche in Form einzelner erster Kacheln 14 dargestellt sind, können von dem Nutzer, welcher zum Beispiel der Fahrers des nicht näher dargestellten Fahrzeugs oder ein anderer Insasse in dem Fahrzeug sein kann, mittels einer Berührung ausgewählt oder in jeglicher Art mittels der Berührung behandelt werden. Diese Anordnung der Inhalte kann zum Beispiel in Form eines standardisierten und vom Benutzer definierbaren Homescreen vorgesehen sein, wobei die gezeigte Darstellung eine von vielen möglichen Varianten zeigt. Diese Art der Darstellung kann mit einem Nahmodus assoziiert werden, welcher also dann auf dem Bildschirm angezeigt wird, wenn der Nutzer nah genug an der Anzeigenvorrichtung 12 und dem Bildschirm 10 positioniert ist, sodass eine Touchbedienung möglich ist.

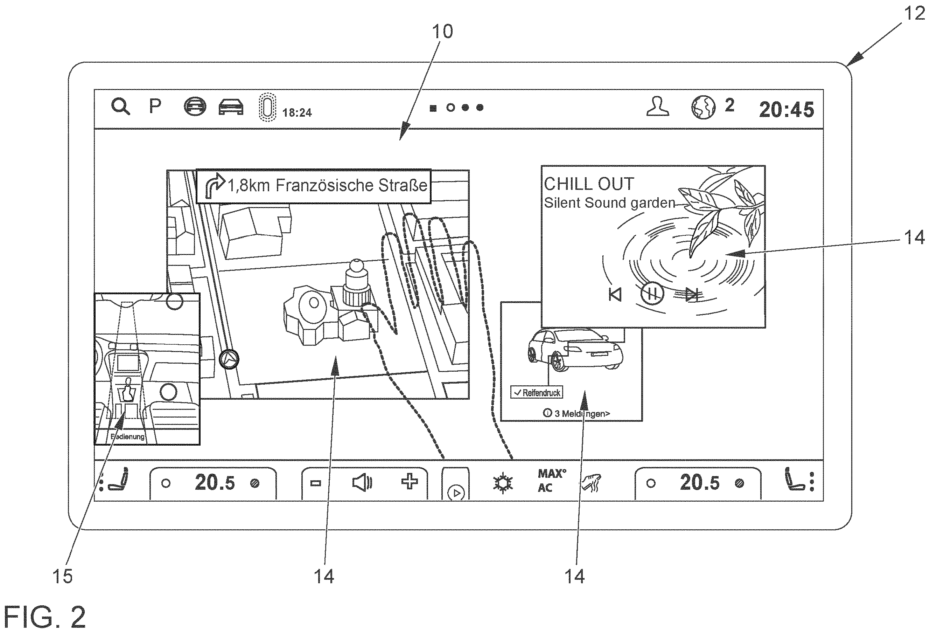

Figur 2 zeigt einen Ausschnitt von einem Bildschirm 10 einer Anzeigenvorrichtung 12 während eines ersten Zustands eines Wechsels von einem ersten Bedienmodus zu einem zweiten Bedienmodus. Dabei löst sich ein Darstellungsmodus der Inhalte auf, wobei die ersten Kacheln 14 allerdings beibehalten werden. Es löst sich demnach die Struktur auf, wobei die Darstellungsform mittels der ersten Kacheln 14 beibehalten werden und lediglich die Positionierung der ersten Kacheln 14 zueinander neu arrangiert wird. Dies kann wie folgt vollzogen werden: Erhält die Anzeigenvorrichtung 12 ein Auslösesignal von einem nicht näher dargestellten Auslöseereignis, wird der erste Betriebsmodus zu einem zweiten Betriebsmodus verändert. In dieser Variante wird der Nutzer auf diesen Wechsel zunächst hingewiesen, indem sich die Darstellungsweise der Inhalte, hier in Form von den ersten Kacheln 14, verändern. Mit anderen Worten wird ein Bedienhinweissignal hier durch einen veränderten Darstellungsmodus der Bildschirminhalte bereitgestellt. Der Nutzer erkennt diese Veränderung und wird somit auf den sich verändernden Bedienmodus aufmerksam gemacht. Zusätzlich erscheint eine zweite Kachel 15 mit zumindest einer neuen Information. Diese schiebt sich, bezogen auf die Bildebene, von links kommend nach rechts in den sichtbaren Bereich des Bildschirms 10. Auf dieser zweiten Kachel 15 erkennt der Nutzer beispielsweise eine Kurzdarstellung des zweiten Bedienmodus mit entsprechenden Hinweisen auf Art und Weise der Bedienung. In dem in Figur 2 gezeigten Beispiel deutet der Inhalt von der zweiten Kachel 15 auf eine Gestenbedienung mittels einer Gestenbedienvorrichtung hin. Es ist vorstellbar, dass in einer nicht weiter gezeigten Variante auch andere Darstellungsweisen oder sogar andere Bedienmodi auf diese Weise eingebunden werden. Es ist zudem vorstellbar, dass über die erwähnten Bedienmodi hinausgehend zusätzlich noch andere Bedienmodi vorgesehen sind, beispielsweise standardmäßige haptische Bedieneinrichtungen wie beispielsweise Knäufe, Knöpfe oder dergleichen, welche im Falle auftretender Schwierigkeiten mit den erwähnten Bedienmodi eine stete Bedienung sicherstellen.

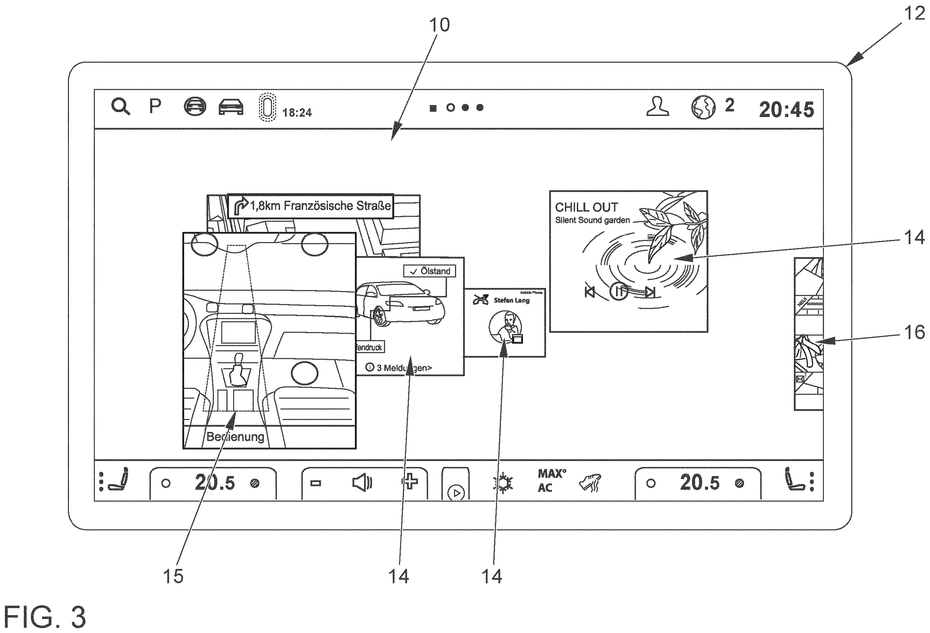

Figur 3 zeigt einen Ausschnitt von einem Bildschirm 10 einer Anzeigenvorrichtung 12 während eines zweiten Zustands eines Wechsels von einem ersten Bedienmodus zu einem zweiten Bedienmodus. Es handelt sich dabei um eine Fortsetzung des in Figur 2 beschriebenen Vorgangs. Die zweite Kachel 15 ist nunmehr gänzlich dargestellt und der Nutzer kann dort eine Bedienanweisung für den zweiten Bedienmodus erkennen. Zudem wandert, bezogen auf die Bildebene, von rechts kommend eine weitere neue dritte Kachel 16 mit einem weiteren Inhalt in den sichtbaren Bereich des Bildschirms 10. Diese dritte Kachel 16 kann beispielsweise ein Medienportal beinhalten. Außerdem ist in Figur 3 gut zu erkennen, inwiefern eine Neuordnung der Kacheln 14,15, 16 stattfindet.

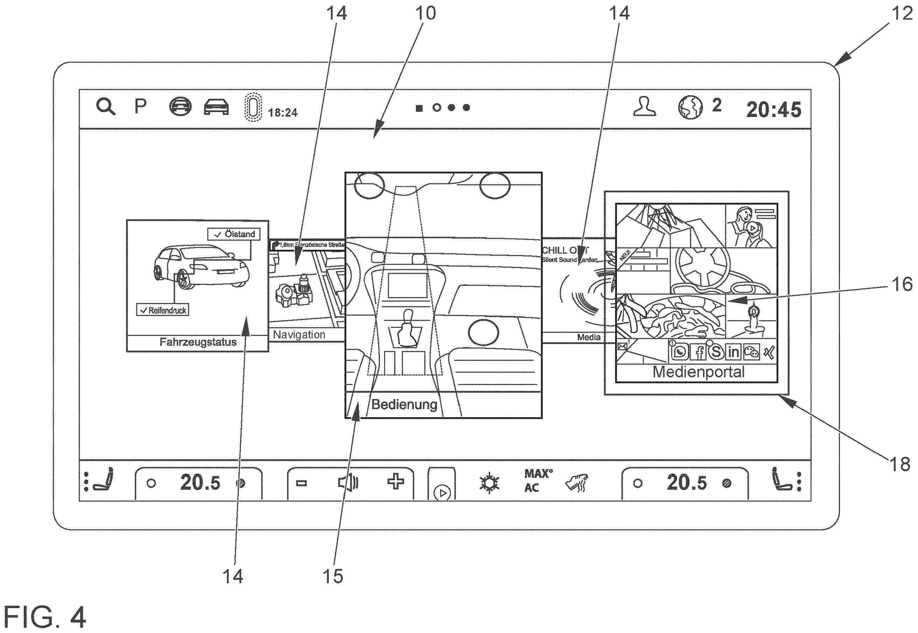

Figur 4 zeigt einen Ausschnitt von einem Bildschirm 10 einer Anzeigenvorrichtung 12 während eines dritten Zustands eines Wechsels von einem ersten Bedienmodus zu einem zweiten Bedienmodus. Es handelt sich dabei um eine Fortsetzung des in Figur 2 und 3 beschriebenen Vorgangs. Die zweite Kachel 15 ist nunmehr gänzlich in der Mitte dargestellt und der Nutzer kann dort somit sehr zentral eine Bedienanweisung für den zweiten Bedienmodus erkennen. Zudem ist die weitere neue dritte Kachel 16 mit einem weiteren Inhalt nunmehr gänzlich in den sichtbaren Bereich des Bildschirms 10 gewandert. Außerdem ist in Figur 4 gut zu erkennen, inwiefern eine Neuordnung der Kacheln 14,15, 16 stattfindet. Dabei können die zweite und dritte Kachel 15, 16 zumindest vorübergehend vergrößert dargestellt werden im Vergleich zu den ersten Kacheln 14, welche bereits unter dem ersten Bedienmodus dargestellt waren. Diese ersten Kacheln 14 sind demnach in Figur 4 in den Hintergrund des Bildschirms 10 gewandert, sodass eine größere Aufmerksamkeit des Nutzers auf die zweite und dritte Kachel 15, 16 gelenkt wird. Die dritte Kachel 16 umgibt dabei ein leuchtender Rahmen 18, um somit die Aufmerksamkeit des Nutzers noch besser dorthin zu lenken.

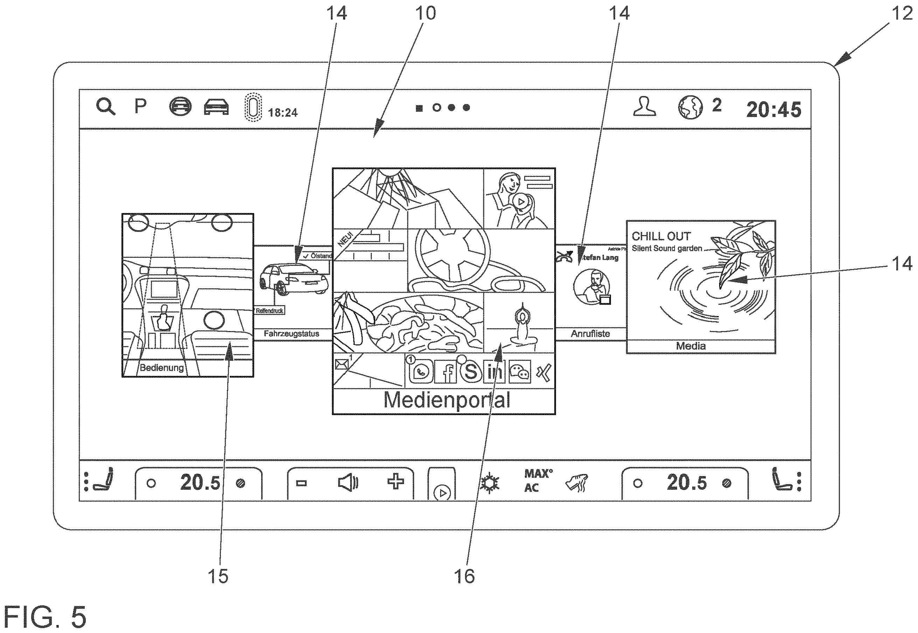

Figur 5 zeigt einen Ausschnitt von einem Bildschirm 10 einer Anzeigenvorrichtung 12 während eines vierten Zustands eines Wechsels von einem ersten Bedienmodus zu einem zweiten Bedienmodus. Es handelt sich dabei um eine Fortsetzung des in den Figuren 2, 3 und 4 beschriebenen Vorgangs. Ein Wechsel von einem Nahmodus hin zu einem Distanzmodus wird demnach unter Neuformierung der Inhalte fortgesetzt.

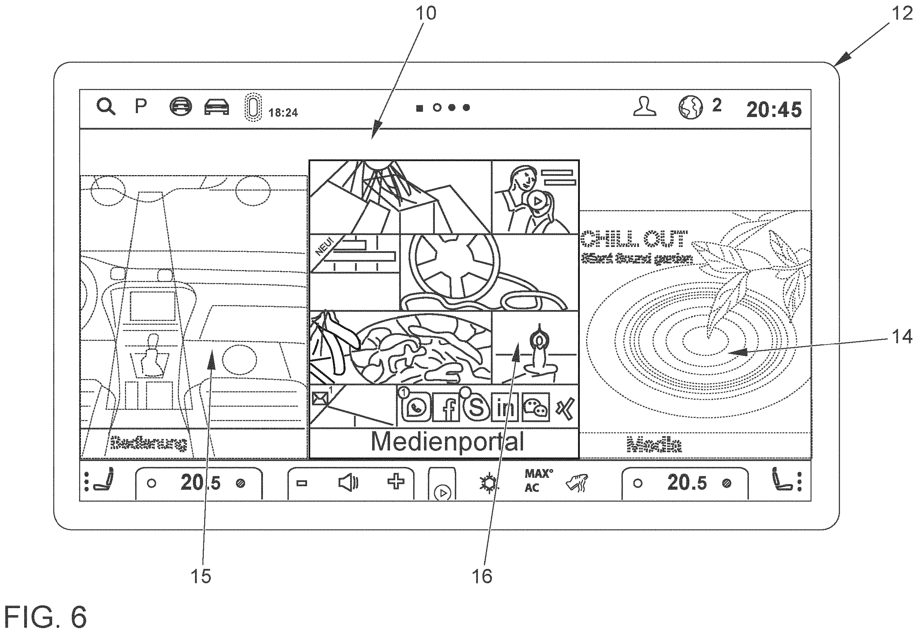

Figur 6 zeigt einen Ausschnitt von einem Bildschirm 10 einer Anzeigenvorrichtung 12 während eines fünften Zustands eines Wechsels von einem ersten Bedienmodus zu einem zweiten Bedienmodus. Es handelt sich dabei um eine Fortsetzung des in den Figuren 2, 3, 4 und 5 beschriebenen Vorgangs. Ein Wechsel von einem Nahmodus hin zu einem Distanzmodus erreicht beispielsweise den in Figur 6 gezeigten Endzustand. Demnach wird ein Zustand der Beendigung der Neuformatierung und somit eine beispielhafte finale Anzeige im Distanzmodus dargestellt. Es ist vorstellbar, dass diese finale Anzeige benutzerdefiniert in jeglicher anderen Art vorgesehen wird.

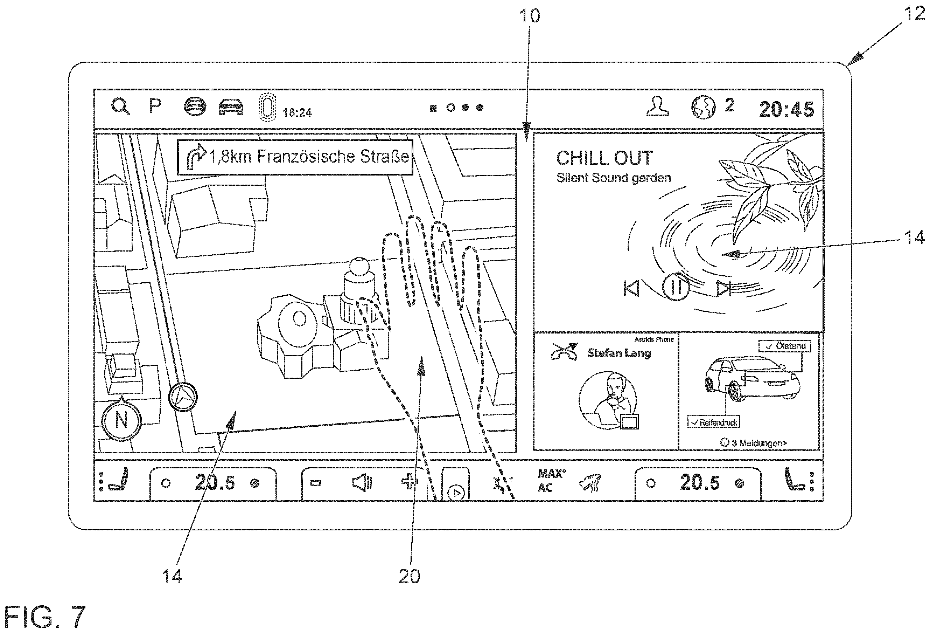

Figur 7 zeigt einen Ausschnitt von einem Bildschirm 10 einer Anzeigenvorrichtung 12 in einem zweiten Bedienmodus mit einem Bedienhinweissignal in Form eines halbtransparenten Symbols 20. Das halbtransparente Symbol 20 ist hier in Form einer schematischen Darstellung einer Hand zu erkennen. Mit anderen Worten wird die optische Inszenierung des Bedienmoduswechsels hier mit einem optischen Bedienhinweissignal vollzogen, wobei die dargestellte Hand einem Nutzer verdeutlicht, inwiefern der zweite Bedienmodus mittels Gestensteuerung funktioniert. Dazu wird vorgeschlagen, dass das halbtransparente Symbol 20 in Form der Hand zumindest teilweise animiert dargestellt wird, wobei es vorstellbar ist, dass ein Bild im Hintergrund zumindest teilweise durch das halbtransparente Symbol 20 hindurch visuell zu erkennen ist. Es wird also auf dem Bildschirm 10 zeitweise eine Hand beziehungsweise eine halbtransparente schematisch visualisierte Hand dargestellt, welche die zuvor beschriebene Auflösung und Neuformierung der Kachelstruktur per Geste vornimmt. Insofern erkennt der Nutzer bereits während dieses Vorgangs, inwiefern zukünftige Befehle oder allgemein eine Bedienung vorzunehmen ist. Ziel ist es, dass der Fahrer anhand der Handbewegung und der Veränderungen der Bildschirminhalte erkennt, anhand welcher Gesten die Elemente des Infotainments bedienbar sind. Dadurch soll die Bedienung des Distanzmodus per Geste erleichtert werden. Beispielsweise wird in Figur 7 die Hand so dargestellt, dass sie eine Stopp-Geste zur Beendigung darstellt. Die Hand bewegt sich dabei zum Bildschirm hin und dem Nutzer wird somit verdeutlicht, dass diese Geste ein Stopp bedingt.

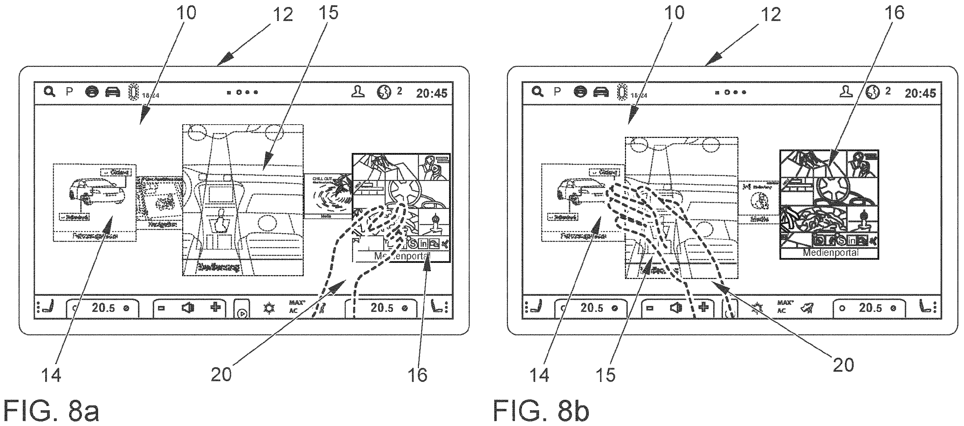

Figur 8a zeigt einen weiteren Ausschnitt von einem Bildschirm 10 einer Anzeigenvorrichtung 12 in einem zweiten Bedienmodus mit einem Bedienhinweissignal. Das halbtransparente Symbol 20, welches wiederum in Form einer schematischen Darstellung einer Hand zu erkennen ist, holt in Figur 8a aus, wobei sie sich nach rechts bezogen auf die Bildebene bewegt.

Figur 8b zeigt einen weiteren Ausschnitt von einem Bildschirm 10 einer Anzeigenvorrichtung 12 in einem zweiten Betriebsmodus mit einem Bedienhinweissignal. Nunmehr bewegt sich das halbtransparente Symbol 20 in Form der Hand nach links bezogen auf die Bildebene. Diese Swipe-Geste (von rechts nach links) kann beispielsweise die karussellartige Neuanordnung der Kacheln 14, 15, 16 verdeutlichen. Mit anderen Worten können die Kacheln 14, 15, 16 rotierend dargestellt werden, wobei eine oder mehrere im Vordergrund entsprechend aktiviert sind und somit vom Nutzer bedient beziehungsweise verändert werden können.

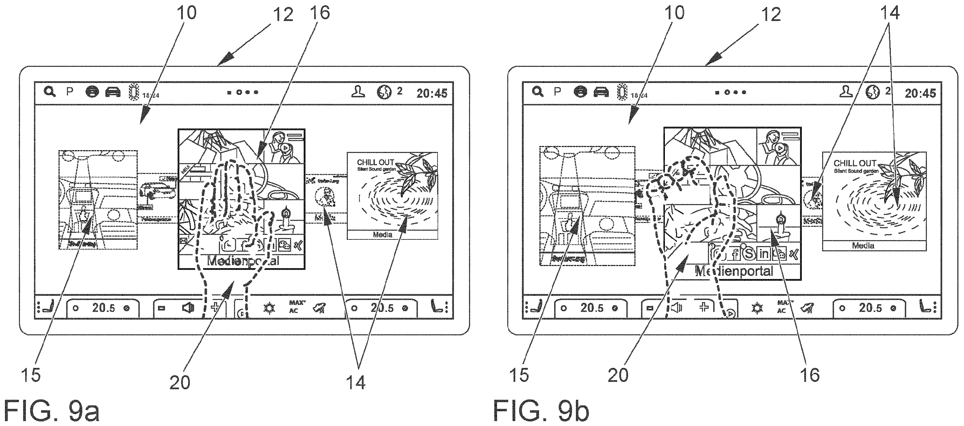

Figur 9a zeigt einen weiteren Ausschnitt von einem Bildschirm 10 einer Anzeigenvorrichtung 12 in einem zweiten Betriebsmodus mit einem Bedienhinweissignal. Hier wird das halbtransparente Symbol 20, welches wiederum in Form einer schematischen Darstellung einer Hand zu erkennen ist, in einer Confirm-Geste dargestellt. Dabei zeigt die Hand zunächst in einer halboffenen Position auf einen vorderen Bereich des Inhalts auf dem Bildschirm 10.

Figur 9b zeigt einen weiteren Ausschnitt von einem Bildschirm 10 einer Anzeigenvorrichtung 12 in einem zweiten Betriebsmodus mit einem Bedienhinweissignal. Diese Fortsetzung von Figur 9a beinhaltet sinngemäß eine Bewegung der Hand vom Bildschirm 10 zum Nutzer hin. Auf diese Weise kann beispielsweise ein gewünschter Inhalt geöffnet werden.

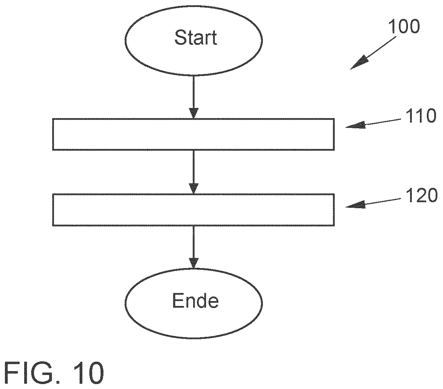

Figur 10 zeigt ein Flussdiagramm 100 von einem Verfahren zur Inszenierung eines Bedienmodalitätenwechsels eines Fahrzeugs 22. In einem ersten Schritt 110 wird dabei zumindest eine Anzeigenvorrichtung 12 in einem Fahrzeug 22 betrieben. Die Anzeigenvorrichtung 12 umfasst dabei zumindest teilweise einen Bildschirm 10, wobei die zumindest eine Anzeigenvorrichtung 12 zumindest zwei Bedienungsmodi für die Bedienung durch einen Nutzer umfasst. In einem zweiten Schritt 120 wird ein Auslösesignal an die zumindest eine Anzeigevorrichtung 12 automatisch bereitgestellt, wobei das Auslösesignal von mindestens einem Auslöseereignis ausgelöst wird, wobei das Auslöseereignis direkt oder indirekt vom Fahrzeug 22 bereitgestellt wird und das Auslösesignal einen Wechsel von einem ersten Bedienmodus zu einem zweiten Bedienmodus auslöst, wobei dem Nutzer dieser Wechsel durch zumindest ein Bedienhinweissignal zumindest teilweise angezeigt wird.

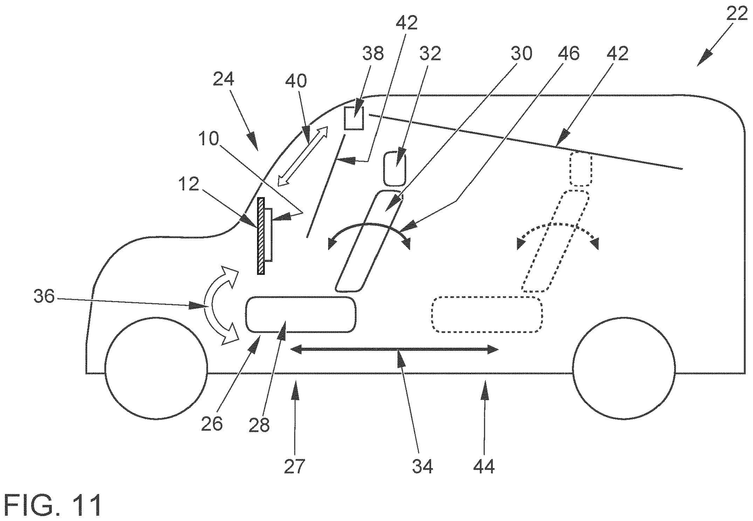

Figur 11 zeigt eine Schnittansicht von einem Fahrzeug 22 mit einem System 24 zur Inszenierung eines Bedienmodalitätenwechsels des Fahrzeugs 22. Eine Anzeigenvorrichtung 12 mit einem Bildschirm 10 ist dabei im vorderen Bereich des Fahrzeugs 22 dargestellt, wobei die Anordnung im Wesentlichen in einem Bereich eines Armaturenbretts dargestellt ist. Es ist vorstellbar, dass diese Anordnung abweicht und in jeglicher anderen Position, vorzugsweise im Sichtfeld eines Nutzers, angeordnet ist. Des Weiteren ist eine Sitzvorrichtung 26 rechts (bezogen auf die Bildebene) neben der Anzeigenvorrichtung 12 dargestellt. Diese Sitzvorrichtung 26, welche beispielsweise ein herkömmlicher Fahrzeugsitz sein kann, ist dabei in einer ersten Position 27 dargestellt. Diese Sitzvorrichtung 26 umfasst dabei eine Sitzeinheit 28 auf dem beispielsweise ein Fahrer sitzen kann, wobei der Fahrer in diesem Fall auch gleichzeitig der Nutzer der Anzeigenvorrichtung 12 ist. Die Sitzvorrichtung 26 umfasst zudem ein Rücklehnelement 30, welches an der Sitzeinheit 28 angeordnet ist. An dem Rücklehnelement 30 ist zudem eine Kopfstütze 32 angeordnet. Ein erster Bewegungspfeil 34 zeigt an, inwiefern die Sitzvorrichtung 26 bezogen auf die Bildebene nach rechts verschoben werden kann. Dabei wird sowohl die Sitzeinheit 28 als auch das Rückenlehnelement 20 und die Kopfstütze 32 bewegt. Anders gesagt ist die Sitzvorrichtung 26 von einer bildschirmnahen zu einer bildschirmfernen Position bewegbar. Ein erster Blockpfeil 36 verdeutlicht den funktionellen Zusammenhang zwischen Sitzvorrichtung 26 und der Anzeigenvorrichtung 12 mit dem Bildschirm 10. Insofern kann die Bewegung der Sitzvorrichtung 26 als ein Auslöseereignis angesehen werden, welches einen Wechsel eines Bedienmodalitätenwechsels bei der Anzeigenvorrichtung 12 mit dem Bildschirm 10 auslöst, wobei dieser Wechsel einhergeht mit einem Bedienhinweissignal für den Nutzer. Ein erster Bedienmodus von der Anzeigenvorrichtung 12 mit dem Bildschirm 10 kann beispielsweise basierend auf einer Touchbedienfunktion sein und ein zweiter Bedienmodus von der Anzeigenvorrichtung 12 mit dem Bildschirm 10 kann beispielsweise basierend auf einer Gestenbedienfunktion sein. Die Gestenbedienfunktion kann beispielsweise durch eine dargestellte Gestenbedienungsvorrichtung 38 realisiert sein, wobei ein zweiter Blockpfeil 40 den funktionellen Zusammenhang zwischen der Gestenbedienungsvorrichtung 38 und der Anzeigenvorrichtung 12 mit dem Bildschirm 10 verdeutlicht. Zwei Strahlen 42 zeigen dabei beispielsweise einen Aktionsraum von der Gestenbedienungsvorrichtung 38 an. Diese umfasst dabei auch eine zweite Sitzposition 44 der Sitzvorrichtung 26, wobei diese zweite Sitzposition 44 durch eine gestrichelte Darstellungsweise der Sitzvorrichtung 26 verdeutlicht ist. Wenn der Fahrzeugsitz 26 in die zweite Position 44 bewegt wird, wechselt der Bedienmodus automatisch und die Gestenbedienungsvorrichtung 38 kann beispielsweise dann dabei vom Nutzer auch in der bildschirmfernen Position genutzt werden. Es ist vorstellbar, dass genauso eine alleinige Veränderung des Rücklehnelements 30 von der Sitzvorrichtung 26 im Sinne des zweiten Bewegungspfeils 46 ausreicht, um den zuvor erwähnten Wechsel herbeizuführen. Insofern wird dann das Verstellen des Rücklehnelements 30 bereits als Auslöseereignis interpretiert und ein Wechsel wird eingeleitet. Beispielsweise ist es vorstellbar, dass die Veränderung des Rücklehnelements 30 den Fahrer von einer bildschirmnahen zu einer bildschirmfernen Position bewegt, sodass der erste Bedienmodus nicht mehr oder nur noch erschwert und unbequem ausführbar ist. Im Extremfall führt die Veränderung des Rücklehnelements 30 zu einer fast liegenden Position des Fahrers, wobei diese Position beispielsweise im Standmodus des Fahrzeugs 22 oder bei einer teil- oder vollautomatisierten Fahrt des Fahrzeugs 22 gewählt werden könnte.

### Bezugszeichenliste

- 10: Bildschirm
- 12: Anzeigenvorrichtung
- 14: erste Kachel
- 15: zweite Kachel
- 16: dritte Kachel
- 18: leuchtender Rahmen
- 20: halbtransparentes Symbol
- 22: Fahrzeug
- 24: System
- 26: Fahrzeugsitz
- 27: erste Sitzposition
- 28: Sitzeinheit
- 30: Rückenlehnelement
- 32: Kopfstütze
- 34: erster Bewegungspfeil
- 36: erster Blockpfeil
- 38: Gestenbedienungsvorrichtung
- 40: zweiter Blockpfeil
- 42: Strahl
- 44: zweite Sitzposition
- 46: zweiter Bewegungspfeil
- 100: Flussdiagramm
- 110: erster Schritt
- 120: zweiter Schritt

## Patentansprüche

1. Verfahren zur Inszenierung eines Bedienmodalitätenwechsels eines Fahrzeugs (22) umfassend die folgenden Schritte:
• Betreiben zumindest einer Anzeigenvorrichtung (12) in dem Fahrzeug (22), welche zumindest teilweise einen Bildschirm (10) umfasst, wobei die zumindest eine Anzeigenvorrichtung (12) zumindest zwei Bedienungsmodi für die Bedienung durch einen Nutzer umfasst;
• Automatisches Bereitstellen eines Auslösesignals an die zumindest eine Anzeigevorrichtung (12), wobei das Auslösesignal von mindestens einem Auslöseereignis ausgelöst wird,
• das Auslöseereignis direkt oder indirekt vom Fahrzeug (22) bereitgestellt wird und das Auslösesignal einen Wechsel von einem ersten Bedienmodus zu einem zweiten Bedienmodus auslöst, wobei dem Nutzer dieser Wechsel durch zumindest ein Bedienhinweissignal zumindest teilweise angezeigt wird,
**dadurch gekennzeichnet, dass**
das Auslöseereignis im direkten und/oder indirekten Zusammenhang mit einem Wechsel eines Fahrmodus des Fahrzeugs (22) steht.

2. Verfahren nach Anspruch 1, wobei der Wechsel des Fahrmodus des Fahrzeugs (22) ein Wechsel von einem manuellen Fahrmodus zu einem teil- oder vollautomatischen Fahrmodus ist.

3. Verfahren nach Anspruch 1, wobei die Anzeigenvorrichtung (12) in den zumindest zwei Bedienungsmodi mindestens einen gleichen Informationsinhalt für den Nutzer bereitstellt.

4. Verfahren nach Anspruch 1, wobei die Anzeigenvorrichtung (12) in dem zweiten Bedienmodus mindestens eine weitere Information und/oder mindestens eine verschiedene Information verglichen mit dem Informationsinhalt in dem ersten Bedienmodus für den Nutzer bereitstellt.

5. Verfahren nach einem der vorherigen Ansprüche, wobei der erste Bedienmodus zumindest teilweise eine Touchbedienfunktion umfasst und der zweite Bedienmodus zumindest teilweise eine Gestenbedienfunktion, steuerbar mittels einer Gestenbedienungsvorrichtung (38), umfasst.

6. Verfahren nach einem der vorherigen Ansprüche, wobei zumindest ein Ausprägungsmerkmal des mindestens einen Auslöseereignisses zumindest ein Ausprägemerkmal des zumindest einen Bedienhinweissignales bedingt.

7. Verfahren nach Anspruch 6, wobei das zumindest eine Ausprägungsmerkmal des mindestens einen Auslöseereignisses ausgewählt ist aus: Dauer des Auslöseereignisses, Geschwindigkeitsverlauf des Auslöseereignisses, und das zumindest eine Ausprägemerkmal des zumindest einen Bedienhinweissignales ausgewählt ist aus: Dauer des Bedienhinweissignales, Geschwindigkeitsverlauf des Bedienhinweissignales.

8. Verfahren nach einem der vorherigen Ansprüche, wobei das zumindest eine Bedienhinweissignal synchron zu dem zumindest einen Auslöseereignis bereitgestellt wird.

9. Verfahren nach einem der vorherigen Ansprüche, wobei das Auslöseereignis eine Verstellung einer Sitzvorrichtung (26) des Nutzers und/oder eine Verstellung zumindest einer Sitzvorrichtung (26) des Fahrzeugs (22) umfasst.

10. Verfahren nach Anspruch 9, wobei die Verstellung entlang einer horizontalen Ebene in Fahrzeuglängsachse von einer bildschirmnahen zu einer bildschirmfernen Position vollzogen wird.

11. Verfahren nach einem der vorherigen Ansprüche, wobei das Bedienhinweissignal optisch und/oder akustisch ist.

12. Verfahren nach Anspruch 1, wobei das Bedienhinweissignal optisch in Form zumindest eines halbtransparenten Symbols auf dem Bildschirm (10) von der Anzeigenvorrichtung (12) und/oder in Form einer zumindest teilweisen Veränderung eines Darstellungsmodus der Bildschirminhalte auf dem Bildschirm (10) der Anzeigenvorrichtung (12) angezeigt wird.

13. Verfahren nach Anspruch 2, wobei das Auslösesignal zumindest zeitweise eine Veränderung des Anzeigenmodus in dem zumindest einen Bildschirm (10) auslöst.

14. System (24) zur Inszenierung eines Bedienmodalitätenwechsels eines Fahrzeugs (22) umfassend zumindest eine Anzeigenvorrichtung (12), welche zumindest teilweise einen Bildschirm (10) umfasst, wobei die zumindest eine Anzeigenvorrichtung (12) in zumindest zwei Bedienungsmodi betreibbar ist, wobei ein erster Bedienmodus zumindest teilweise eine Touchbedienfunktion umfasst und ein zweiter Bedienmodus zumindest teilweise eine Gestenbedienfunktion, steuerbar mittels einer Gestenbedienungsvorrichtung (38), umfasst, wobei die Anzeigenvorrichtung (12) ausgelegt ist ein Auslösesignal von mindestens einem Auslöseereignis entgegenzunehmen, **dadurch gekennzeichnet, dass**
das Auslöseereignis direkt oder indirekt vom Fahrzeug (22) bereitstellbar ist und im direkten und/oder indirekten Zusammenhang mit einem Wechsel eines Fahrmodus des Fahrzeugs (22) steht und mittels des Auslösesignals ein Wechsel von dem ersten Bedienmodus zu dem zweiten Bedienmodus in der zumindest einen Anzeigenvorrichtung (12) auslösbar ist, wobei dem Nutzer dieser Wechsel durch zumindest ein Bedienhinweissignal zumindest teilweise anzeigbar ist.

## Claims

1. Method for enacting a change of operating modalities of a vehicle (22), comprising the following steps:
• operating at least one display device (12) in the vehicle (22), which at least partially comprises a screen (10), the at least one display device (12) comprising at least two operating modes for operator control by a user;
• automatically providing a triggering signal to the at least one display device (12), the triggering signal being triggered by at least one trigger event,
• the trigger event being provided directly or indirectly by the vehicle (22) and the triggering signal triggering a change from a first operating mode to a second operating mode, this change being at least partially indicated to the user by at least one operator alerting signal,
**characterized in that**
the trigger event is directly and/or indirectly connected to a change of a driving mode of the vehicle (22).

2. Method according to Claim 1, the change of the driving mode of the vehicle (22) being a change from a manual driving mode to a partially or fully automatic driving mode.

3. Method according to Claim 1, the display device (12) providing at least an identical information content for the user in the at least two operating modes.

4. Method according to Claim 1, the display device (12) in the second operating mode providing for the user at least one further item of information and/or at least one different item of information compared with the information content in the first operating mode.

5. Method according to one of the preceding claims, the first operating mode at least partially comprising a touch control function and the second operating mode at least partially comprising a gesture control function, controllable by means of a gesture control device (38).

6. Method according to one of the preceding claims, at least one characteristic feature of the at least one trigger event causing at least one characteristic feature of the at least one operator alerting signal.

7. Method according to Claim 6, the at least one characteristic feature of the at least one trigger event being selected from: duration of the trigger event, speed profile of the trigger event, and the at least one characteristic feature of the at least one operator alerting signal being selected from: duration of the operator alerting signal, speed profile of the operator alerting signal.

8. Method according to one of the preceding claims, the at least one operator alerting signal being provided synchronously with the at least one trigger event.

9. Method according to one of the preceding claims, the trigger event comprising an adjustment of a seat device (26) by the user and/or an adjustment of at least one seat device (26) by the vehicle (22).

10. Method according to Claim 9, the adjustment being implemented along a horizontal plane in the longitudinal axis of the vehicle from a position near the screen to a position away from the screen.

11. Method according to one of the preceding claims, the operator alerting signal being optical and/or acoustic.

12. Method according to Claim 1, the operator alerting signal being indicated optically in the form of at least one semi-transparent symbol on the screen (10) of the display device (12) and/or in the form of an at least partial change of a mode of representing the screen contents on the screen (10) of the display device (12).

13. Method according to Claim 2, the triggering signal triggering at least for a time a change of the display mode in the at least one screen (10).

14. System (24) for enacting a change of operating modalities of a vehicle (22), comprising at least one display device (12), which at least partially comprises a screen (10), the at least one display device (12) being operable in at least two operating modes, a first operating mode at least partially comprising a touch control function and a second operating mode at least partially comprising a gesture control function, controllable by means of a gesture control device (38), the display device (12) being designed to accept a triggering signal from at least one trigger event, **characterized in that**
the trigger event can be provided directly or indirectly by the vehicle (22) and is directly and/or indirectly connected to a change of a driving mode of the vehicle (22) and, by means of the triggering signal, a change from the first operating mode to the second operating mode can be triggered in the at least one display device (12), it being possible for this change to be at least partially indicated to the user by at least one operator alerting signal.

## Revendications

1. Procédé de scénarisation d'un changement de modalités opératoires d'un véhicule (22), ledit procédé comprenant les étapes suivantes :
▪ utiliser dans le véhicule (22) au moins un dispositif d'affichage (12) qui comprend au moins partiellement un écran (10), l'au moins un dispositif d'affichage (12) comprenant au moins deux modes opératoires destinés à une opération par un utilisateur ;
▪ fournir automatiquement un signal de déclenchement à l'au moins un dispositif d'affichage (12), le signal de déclenchement étant déclenché par au moins un événement déclencheur,
▪ l'événement déclencheur étant fourni directement ou indirectement par le véhicule (22) et le signal de déclenchement déclenchant un passage d'un premier mode opératoire à un deuxième mode opératoire, ce passage étant au moins partiellement indiqué à l'utilisateur par au moins un signal de notification d'opération,
**caractérisé en ce que**
l'événement déclencheur est lié directement et/ou indirectement à un changement du mode de conduite du véhicule (22).

2. Procédé selon la revendication 1, le changement du mode de conduite du véhicule (22) étant un passage d'un mode de conduite manuelle à un mode de conduite partiellement ou totalement automatique.

3. Procédé selon la revendication 1, le dispositif d'affichage (12) fournissant au moins le même contenu d'informations à l'utilisateur dans les au moins deux modes opératoires.

4. Procédé selon la revendication 1, le dispositif d'affichage (12) fournissant à l'utilisateur dans le deuxième mode opératoire au moins une information supplémentaire et/ou au moins une information qui diffère du contenu d'information du premier mode opératoire.

5. Procédé selon l'une des revendications précédentes, le premier mode opératoire comprenant au moins partiellement une fonction opératoire tactile et le deuxième mode opératoire comprenant au moins partiellement une fonction opératoire gestuelle, commandable au moyen d'un dispositif d'opération gestuelle (38).

6. Procédé selon l'une des revendications précédentes, au moins une caractéristique de l'au moins un événement déclencheur nécessitant au moins une caractéristique de l'au moins un signal de notification d'opération.

7. Procédé selon la revendication 6, l'au moins une caractéristique de l'au moins un événement déclencheur étant sélectionnée parmi : la durée de l'événement déclencheur, le profil de vitesse de l'événement déclencheur, et l'au moins une caractéristique de l'au moins un signal de notification d'opération étant sélectionnée parmi : la durée du signal de notification d'opération, le profil de vitesse du signal de notification d'opération.

8. Procédé selon l'une des revendications précédentes, l'au moins un signal de notification d'opération étant fourni de manière synchrone avec l'au moins un événement déclencheur.

9. Procédé selon l'une des revendications précédentes, l'événement déclencheur comprenant un réglage d'un dispositif de siège (26) de l'utilisateur et/ou un réglage d'au moins un dispositif de siège (26) du véhicule (22).

10. Procédé selon la revendication 9, le réglage étant effectué le long d'un plan horizontal dans l'axe longitudinal du véhicule depuis une position proche de l'écran à une position éloignée de l'écran.

11. Procédé selon l'une des revendications précédentes, le signal de notification d'opération étant optique et/ou acoustique.

12. Procédé selon la revendication 1, le signal de notification d'opération étant affiché optiquement sous la forme d'au moins un symbole semi-transparent sur l'écran (10) du dispositif d'affichage (12) et/ou sous la forme d'un changement au moins partiel d'un mode de présentation du contenu d'écran sur l'écran (10) du dispositif d'affichage (12).

13. Procédé selon la revendication 2, le signal de déclenchement déclenchant au moins temporairement un changement du mode d'affichage dans l'au moins un écran (10) .

14. Système (24) de scénarisation d'un changement de modalités opératoires d'un véhicule (22) comprenant au moins un dispositif d'affichage (12) qui comprend au moins partiellement un écran (10), l'au moins un dispositif d'affichage (12) pouvant être utilisé dans au moins deux modes opératoires, un premier mode opératoire comprenant au moins partiellement une fonction d'opération tactile et un deuxième mode opératoire comprenant au moins partiellement une fonction d'opération gestuelle, commandable au moyen d'un dispositif d'opération gestuelle (38), le dispositif d'affichage (12) étant conçu pour recevoir un signal de déclenchement d'au moins un événement déclencheur, **caractérisé en ce que**
l'événement déclencheur peut être fourni directement ou indirectement par le véhicule (22) et est directement et/ou indirectement lié à un changement d'un mode de conduite du véhicule (22) et un passage du premier mode opératoire au deuxième mode opératoire dans l'au moins un dispositif d'affichage (12) peut être déclenché au moyen du signal de déclenchement, ce passage pouvant être au moins partiellement indiqué à l'utilisateur par au moins un signal de notification d'opération.
